# EUROPÄISCHE PATENTSCHRIFT

(11) **EP 2 759 329 B1**
(45) Veröffentlichungstag und Bekanntmachung des Hinweises auf die Patenterteilung: **06.04.2016**
(21) Anmeldenummer: 14000329.4
(22) Anmeldetag: 29.01.2014
(51) Int. Cl.: B01D 53/34, B01D 53/38, B01D 53/86, F23G 7/06, F28D 17/00

(54) **VERFAHREN UND VORRICHTUNG ZUR REINIGUNG VON ABGASEN**
METHOD AND DEVICE FOR PURIFYING EXHAUST GASES
PROCÉDÉ ET DISPOSITIF DESTINÉS AU NETTOYAGE DE GAZ D'ÉCHAPPEMENT

(30) Priorität: 29.01.2013 DE 102013100856
(43) Veröffentlichungstag der Anmeldung: 30.07.2014
(73) Patentinhaber: Chemisch Thermische Prozesstechnik GmbH, 8042 Graz (AT)
(72) Erfinder: Mülleder, Christian, 8071 Grambach (AT)
(74) Vertreter: LS-MP von Puttkamer Berngruber Loth Spuhler

(56) Entgegenhaltungen:
- WO-A1-99/47245
- DE-A1- 4 432 316
- DE-A1- 19 720 205
- DE-C1- 10 214 567
- US-A1- 2011 081 285

## Beschreibung

Die Erfindung bezieht sich auf ein Verfahren nach dem Oberbegriff des Anspruchs 1. Sie hat auch eine Vorrichtung zur Durchführung des Verfahrens sowie die Verwendung der Vorrichtung zum Gegenstand.

Die Kombination einer regenerativen thermischen Nachverbrennungsanlage mit einer selektiven katalytischen Reduktion (englisch: selective catalytic reduction, SCR) ist aus DE 19905733 B4 bekannt. Bei diesem Verfahren wird auf den regenerativen Wärmeaustauschermassen jeweils eine SCR-Katalysatormasse angeordnet, wodurch bei Zugabe eines Reduktionsmittels am Eintritt des Regenerators eine gute katalytische Entstickung bei hohem thermischen Wirkungsgrad erreicht wird. Allerdings kann mit diesem Verfahren keine gleichzeitige Reinigung von organischen Komponenten erfolgen, da oberhalb des Katalysators die Temperatur zur thermischen Oxidation von organischen Schadstoffen nicht ausreicht.

Auch DE 4 432 316 Al offenbart die Kombination von regenerativer thermischer Nachverbrennung mit selektiver Katalytischer Reduktion.

Aus EP 472 605 B1 (Figur 4) ist ein Verfahren zur Abgasreinigung nach dem Oberbegriff des Anspruchs 1 bekannt, bei dem die Regeneratoren vertikal dreigeteilt sind. Das Abgas strömt erst durch den unteren Niedertemperatur-Regeneratorabschnitt, dann durch den in der Mitte liegenden SCR-Katalysator, in welchem Ammoniak aus dem Abgas absorbiert wird. Danach wird das Abgas in dem oberen Hochtemperatur-Regeneratorabschnitt auf 800°C erhitzt, wobei die organischen Substanzen in der nachfolgenden Brennkammer thermisch verbrannt werden. Das so vorgereinigte Abgas strömt dann durch einen zweiten Hochtemperatur-Regenerator und gibt die Wärme an dessen Wärmespeicherkörper ab. Danach werden bei ca. 430 bis 230°C an der Katalysatorschicht Stickoxide (NOx) mit dem absorbierten Ammoniak reduziert.

Bei diesem Verfahren ist nachteilig, dass sich damit in Strömungsrichtung über den SCR-Katalysator ein stark schwankendes Temperaturprofil wie im Wärmetauscher einstellt und sich auch noch mit der Zykluszeit ändert. Dies macht es verfahrensbedingt unmöglich, den SCR-Katalysator über sein gesamtes Volumen bei seiner optimalen Temperatur zu betreiben. Zugleich stellt der ständige Temperaturwechsel eine hohe mechanische Beanspruchung für den SCR-Katalysator dar.

Ein weiterer Nachteil ist, dass bei der Reduktion von NOx zu Stickstoff (N₂) Wärme frei wird. Bei hohen NOx-Konzentrationen limitiert alleine diese frei werdende Wärme die maximale NOx-Eintrittskonzentration, da sonst der SCR-Katalysator durch Überhitzen thermisch schnell altern würde. Muss noch ein Temperaturprofil und dessen Schwankungen über die Länge des SCR-Katalysators berücksichtigt werden, verringert sich die maximale NOx-Eintrittskonzentration dramatisch.

Ein weiterer entscheidender Nachteil besteht darin, dass bei dem bekannten Verfahren mit drei Regeneratoren mindestens 3 Gitterroste pro Regenerator aus statischen Gründen notwendig sind, wenn man homogenes Extrudat oder gewellte oder Corrugat SCR-Katalysatoren aus relativ weichem Material verwenden will, und nicht die wesentlich kostspieligeren mit SCR-katalytisch aktivem Washcoat beschichteten keramischen Wärmetauscher-Waben.

Außerdem muss in jedem Regenerator ein Katalysator in ausreichender Menge vorgesehen sein, was bei einer Anlage mit zwei Regeneratoren das doppelte und bei einer Anlage mit drei Regeneratoren im Vergleich zu einer einfachen SCR-Anlage die dreifache Katalysatormenge bedeutet.

Aufgabe der Erfindung ist es, einerseits den gesamten Energieinhalt aus der thermischen Oxidation oder Nachverbrennung von organischen Komponenten sowie Kohlenstoffmonoxid (CO) bzw. der thermischen Reduktion von Lachgas (N₂O) zu Stickstoff (N₂) in einem thermisch-regenerativen Verfahren möglichst ohne externe Energiezufuhr mittels der bei der Reaktion erzeugten Temperaturerhöhung zu nutzen und diese zusätzlich für die Entstickung mittels einer SCR nutzbar zu machen und andererseits die Möglichkeit zu schaffen, den SCR-Katalysator mit seiner optimalen Betriebstemperatur ohne separate Energiezufuhr zu betreiben und dies über sein gesamtes Volumen.

Dies wird erfindungsgemäß mit dem im Anspruch 1 gekennzeichneten Verfahren erreicht. In den Ansprüchen 2 bis 9 sind bevorzugte Ausführungsformen des erfindungsgemäßen Verfahrens wiedergegeben. Der Anspruch 10, der eine bevorzugte Vorrichtung zur Durchführung des erfindungsgemäßen Verfahrens zum Gegenstand hat, wird durch die Maßnahmen der Ansprüche 11 bis 14 weiter ausgestaltet. Der Anspruch 15 betrifft bevorzugte Verwendungen der erfindungsgemäßen Vorrichtung.

Nach der Erfindung wird das Abgas, welches mit Luftsauerstoff oxidierbare, thermisch abreinigbare Verbindungen sowie Stickoxide und/oder Verbindungen enthält, die bei der thermischen Abreinigung Stickoxide bilden, in einer thermischen Nachverbrennungsanlage gereinigt. Bei den oxidierbaren, thermisch abreinigbaren Verbindungen handelt es sich insbesondere um flüchtige organische Verbindungen (VOCs für volatile organic compounds), Kohlenmonoxid, Ammoniak und Lachgas, wobei Ammoniak (NH₃) zu Stickstoff (N₂), NOx und Wasser und wobei Lachgas (N₂O) zu N₂ reduziert und O₂, sowie zu NOx oxidiert wird. Außer durch Lachgas können Stickoxide insbesondere thermisch, bei Temperaturen oberhalb 1100 °C (wie z.B. in der Brennerflamme) oder durch stickstoffhaltige organische Verbindungen, beispielsweise Amine, Nitrile oder Cyanide, bei der thermischen Abreinigung, also ohne Verwendung eines Katalysators, gebildet werden.

Die Nachverbrennungsanlage weist wenigstens zwei, mit Wärmespeicherkörpern gefüllte und mit einer gemeinsamen Brennkammer verbundene Regeneratoren auf. Dabei wird das zu reinigende Abgas wechselweise einem Rohgaseintritt-Regenerator, dessen Wärmespeicherkörper zuvor erwärmt worden sind, und das aus der Brennkammer austretende, thermisch abgereinigte Abgas einem Reingasaustritt-Regenerator zur Erwärmung von dessen Wärmespeicherkörpern und zur SCR-Reaktion der Stickoxide zu Stickstoff mit einem Reduktionsmittel zugeführt.

Dabei braucht unabhängig von der Rohgastemperatur keine zusätzliche Energie für die Erreichung der erforderlichen Temperatur für die SCR-Reaktion aufgewendet zu werden.

Erfindungsgemäß sind die wenigstens zwei Regeneratoren der Nachverbrennungsanlage in Strömungsrichtung jeweils in einen ersten, von der Brennkammer abgewandten und einen zweiten, der Brennkammer zugewandten Regeneratorabschnitt zweigeteilt. Dabei weisen die wenigstens zwei Regeneratoren einen gemeinsamen SCR-Katalysator auf, wobei das in der Brennkammer thermisch abgereinigte Abgas nach Abkühlung in dem der Brennkammer benachbarten Abschnitt des Reingasaustritt-Regenerators die zur SCR-Reaktion erforderliche Temperatur von ca. 300°C erreicht und mit dem Reduktionsmittel vermischt dem gemeinsamen Katalysator zur Bildung von Reingas zugeführt wird.

Das mit dem SCR-Katalysator erhaltene Reingas gibt seine Wärme an die Wärmespeicherkörper des zweiten, von der Brennkammer abgewandten Abschnitts des Reingasaustritts-Regenerators ab und strömt dann ins Freie.

Nach dem erfindungsgemäßen Verfahren mit dem Vorteil der konstanten Durchströmung des SCR-Katalysators bei einer optimalen Katalysatortemperatur können auch mechanisch und hinsichtlich Temperaturvvechsel wenig beanspruchbare aber dafür preiswertere extrudierte SCR-Katalysatoren beispielsweise auf der Basis von Vanadiumpentoxid (V₂O₅), Wolframtrioxid (WO₃) und/oder Titandioxid (TiO₂) verwendet werden.

Das erfindungsgemäße Verfahren kann unabhängig von der Anzahl der Regeneratoren mit nur einem SCR-Katalysator durchgeführt werden, der unabhängig vom Zyklus der thermischen Nachverbrennungsanlage stets in ein und derselben Richtung durchströmt wird.

Für das Erreichen der für die SCR-Reaktion erforderlichen Temperatur braucht keine zusätzliche Energie aufgebracht zu werden, da das Abgas im Reingasaustritt-Regenerator an dem der Brennkammer zugewandten Abschnitt, also an geeigneter Stelle entnommen werden kann. Diese Stelle wird so gewählt, dass das in der Brennkammer bei vorzugsweise mindestens 800°C abgereinigte Abgas nach Durchströmen des der Brennkammer benachbarten Abschnitts des Reingasaustritts-Regenerators derart abgekühlt ist, dass die für die SCR-Reaktion erforderliche Temperatur, die vorzugsweise 200 bis 400°C, insbesondere 250 bis 350°C und besonders bevorzugt 280 bis 320°C beträgt, eingestellt wird.

Um die Selektivität des SCR Katalysators sicherzustellen und die Alterung eines SCR-Katalysators gering zu halten, aber auch um die Oxidation von SO₂ zu SO₃ zu verhindern, muss dieses definierte Fenster der Betriebstemperatur gewählt werden.

Die Stickoxide in der Brennkammer können durch Zugabe eines Reduktionsmittels in die Brennkammer durch Reduktion zu Stickstoff thermisch, also nicht katalytisch, vorentstickt werden.

Zur Reduktion der Stickoxide in der Brennkammer wird vorzugsweise eine Stickstoffwasserstoffverbindung als wässrige Lösung verwendet, Als Stickstoffwasserstoffverbindung kann beispielsweise Ammoniak, Harnstoff oder Carbaminsäure verwendet werden.

Um die zur thermischen Entstickung in der Brennkammer erforderliche Reaktionstemperatur zu senken, können der Stickstoffwasserstoffverbindung Additive, beispielsweise organische Verbindungen, wie Alkohole, zugesetzt werden. Zur optimalen Verteilung der wässrigen Lösung der Stickstoffwasserstoffverbindung in der Brennkammer können Zweistoffdüsen oder Ultraschallzerstäuber mit jeweils konstantem oder pulsierendem Pumpenvordruck vorgesehen sein.

Durch die Zufuhr des Reduktionsmittels in die Brennkammer werden typisch etwa 50 % der Stickstoffoxidfracht des Rohgases entfernt, ein allfälliger Ammoniakschlupf bei der thermischen NOx-Reduktion in der Brennkammer wird mit dem nachfolgenden SCR-Katalysator als zusätzliches Reduktionsmittel genutzt, so dass es erfindungsgemäß zu keiner Ammoniakemission und gleichzeitig zur Verringerung des Reduktionsmittelbedarfs bei der SCR-Reaktion kommt. Dabei kann in die Brennkammer als Reduktionsmittel auch ein VOC-haltiges Reduktionsmittel eingesetzt werden, beispielsweise Abwasser aus der Fotoindustrie oder der Chemischen Industrie, welches neben Ammoniak auch beträchtliche Mengen an organischen Lösungsmitteln enthält.

Zur SCR-Reaktion wird die Stickstoffwasserstoffverbindung, wie z.B. Ammoniak als Reduktionsmittel entweder als wässrige Lösung oder gasförmig über eine einstufige oder zweistufige Mischeinrichtung dem aus dem der Brennkammer zugewandten, zweiten Abschnitt des Reingasaustritt-Regenerators direkt stromauf des SCR-Katalysators zugeführt.

Die Wärmespeicherkörper der regenerativen thermischen Nachverbrennungsanlage bestehen vorzugsweise aus extrudierten prismenförmigen keramischen Wärmespeicherkörpern, die eine Vielzahl von in Gasströmungsrichtung verlaufende Gasdurchtrittskanäle aufweisen, wie beispielsweise in EP 472 605 B1 beschrieben. Der SCR-Katalysator kann ebenfalls aus solchen extrudierten prismenförmigen keramischen Wärmespeicherkörpern aus SCR-Katalysatormasse mit in Gasströmungsrichtung verlaufenden Gasdurchtrittskanälen bestehen.

Das thermisch abgereinigte Abgas strömt vorzugsweise vor Mischung mit dem Reduktionsmittel durch eine Keramikschüttung zur Vergleichsmäßigung der Temperatur des Abgases vor Eintritt in den SCR-Katalysator. Die Keramikschüttung besteht aus Keramikformkörpern, vorzugsweise in Sattel- oder Ringform. Sie verteilt zugleich das zugegebene Reduktionsmittel über die Querschnittsfläche des SCR-Katalysators und dämpft die Temperaturschwankungen am Eintritt in den SCR Katalysator.

Nach der Erfindung wird also das Abgas in Zyklen wechselweise wenigstens einem Rohgaseintritt-Regenerator zugeführt, dessen Wärmespeicherkörper zuvor erwärmt worden sind. Das so erwärmte Abgas wird der Brennkammer zugeführt, welche eine hohe Temperatur von mehr als 800°C, insbesondere 850 bis 1000°C aufweist. Bei dieser hohen Temperatur werden die VOCs in der Brennkammer durch den Luftsauerstoff in dem Abgas verbrannt bzw. Lachgas thermisch zu Stickstoff umgewandelt. Die dabei entstandene Wärme wird beim Durchströmen des der Brennkammer zugewandten Abschnitts des Reingasaustritt-Regenerators an diesem Abschnitt abgegeben. Durch Ausschleusen des Abgases nach dem der Brennkammer zugewandten Abschnitts des zweigeteilten Reingasaustritt-Regenerators ist es möglich, in allen Zyklen in derselben Richtung das Abgas über den SCR-Katalysator zu führen. Das mit dem Reduktionsmittel vermischte Abgas wird nach Strömungsverteilung und Temperaturvergleichsmäßigung über den Zyklus durch die Keramikschüttung dem SCR-Katalysator bei einer optimalen Betriebstemperatur von ca. 300°Czugeführt. Das Reingas, also das nunmehr auch mit dem SCR-Katalysator gereinigte Abgas, gibt an den von der Brennkammer abgewandten Abschnitt des zweigeteilten Reingasaustritt-Regenerators, die verbleibende Wärme ab, womit auch noch die aus der SCR-Reaktion entstandene Wärme genutzt werden kann.

Die Verweilzeit des Abgases in der Brennkammer beträgt vorzugsweise 0,5 bis 3, insbesondere 0,7 bis 1,5 Sekunden beispielsweise bei 800 bis 850°C wenn keine thermische Reduktion mit einem Reduktionsmittel durchgeführt wird. Dem gegenüber beträgt bei einer thermischen SNCR Reduktion mit einem Reduktionsmittel die Verweilzeit vorzugsweise 1 bis 4, insbesondere 1,5 bis 2 Sekunden bei einer Brennkammertemperatur von mehr als 850°C, insbesondere 900 bis 950°C. Bei der thermischen Zersetzung von Lachgas beträgt die Verweilzeit vorzugsweise 1 bis 3 s, insbesondere 1,5 bis 2 s bei einer Brennkammertemperatur von vorzugsweise 900 - 1000 °C, insbesondere 950 - 970 °C.

Vorzugsweise wird jeder Rohgaseintritt-Regenerator, um darin enthaltene Abgasreste zu entfernen, mit Reingas aus einem weiteren zweigeteilten Regenerator vor dem Wechsel der Abgasströmungsrichtung einen Zyklus lang gespült. Damit kann für VOCs oder Kohlenmonoxid eine Reinigungsleistung von über 99,5 % erzielt werden.

Anstelle von zwei oder drei Regeneratoren wird bei größeren Abgasdurchsätzen vorteilhafterweise ein Vielfaches an erfindungsgemäß ausgebildeten

Regeneratorpaaren vorgesehen. Dadurch kann die Größe der einzelnen Regeneratoren auf ein transportierbares Maß begrenzt werden. Außerdem wird durch die sequenzielle Weiterschaltung der Regeneratoren die Temperaturwechselbelastung des SCR-Katalysators reduziert. So beträgt bei einer Anlage mit 5 Regeneratoren die Wechselbelastung für den SCR-Katalysator nur mehr 50 % und bei einer Anlage mit 7 Regeneratoren lediglich 33 % im Vergleich zu einer Anlage mit 3 Regeneratoren.

Bei der Vorrichtung zur Durchführung des erfindungsgemäßen Verfahrens sind wenigstens 2 mit einer gemeinsamen Brennkammer verbundene Regeneratoren vorzugsweise parallel nebeneinander angeordnet. Dabei weisen sie jeweils 2 vorzugsweise senkrecht übereinander angeordnete mit Wärmespeicherkörpern gefüllte Abschnitte auf. Seitlich an den Abschnitten ist ein den mindestens 2 Regeneratoren gemeinsamer Anbau mit dem SCR-Katalysator angeschlossen.

Der Anbau weist zum Verbinden des Katalysators mit dem unteren Abschnitt und dem oberen Abschnitt der wenigstens zwei Regeneratoren Absperrorgane, vorzugsweise Tellerventile auf, die derart angeordnet sind, dass der SCR-Katalysator durchströmt oder umgangen werden kann, also nicht durchströmt wird.

Die Erfindung ist generell zur Reinigung von Abgas geeignet, welches mit dem Luftsauerstoff im Abgas oxidierbare, thermisch abreinigbare Verbindungen sowie Stickoxide und/oder Verbindungen enthält, die bei der thermischen Abreinigung im Brennraum der Nachverbrennungsanlage Stickoxide bilden.

Das erfindungsgemäße Verfahren und die erfindungsgemäße Vorrichtung sind daher insbesondere zur Reinigung von Abgasen geeignet, die bei der Zementklinker-, Salpetersäure-, Adipinsäure- und Düngemittelherstellung anfallen. Auch ist das erfindungsgemäße Verfahren bzw. die erfindungsgemäße Vorrichtung zur Reinigung der bei der Urantrioxid-Herstellung anfallenden Abgase geeignet, welches durch Erhitzen von Ammoniumdiuranat (yellow cake) in einer Sauerstoffatmosphäre erhalten wird.

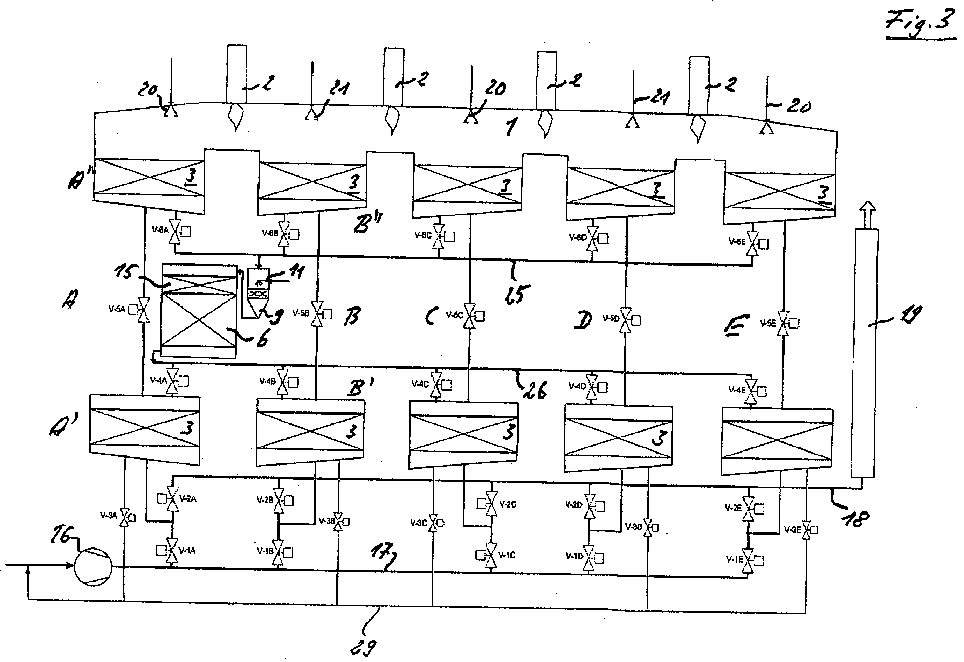

Für eine Vorrichtung mit 5 Regeneratoren mit Spülmöglichkeit ist die zyklische Weiterschaltung, also der Schaltplan der Absperrorgane der Regeneratoren, in der nachfolgenden Tabelle beispielhaft wiedergegeben, wobei die Nummerierung der Absperrorgane Figur 3 der Zeichnung entspricht und die Regeneratoren dementsprechend mit A bis E bezeichnet sind. Darin bedeutet "0" geschlossenes und "1" geöffnetes Absperrorgan.

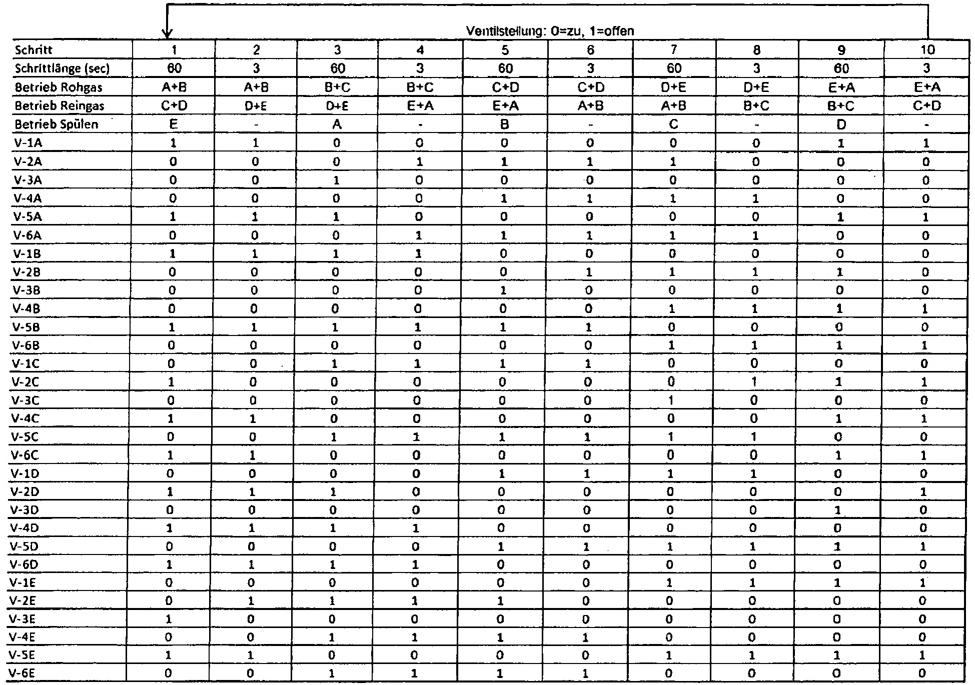

### Beispiel 1

### (Zementklinkerherstellung)

Die Herstellung von Zementklinker ist ein energieintensiver Prozess, weshalb der Abgasstrom des Drehrohrofens zur Vorwärmung des Rohmehls verwendet wird, um möglichst viel Abwärme im Prozess nutzen zu können. Bei modernen Zementwerken wird auch die Abwärme des Klinkerkühlers genutzt. Dennoch hat der Abluftstrom im Ausmaß von einigen 100.000 Nm³/h eine Temperatur von 130 - 200°C, welche den Wärmeenergiebedarf des Zementwerkes widerspiegelt und weshalb Sekundärbrennstoffe sowie stark kohlenwasserstoffhaltiger Bodenaushub im Rohmehl mitverarbeitet werden. Durch Verdunstung und Teilpyrolyse gelangen die Kohlenwasserstoffe (VOC) und zusätzlich gebildetes Kohlenmonoxid und NOx mit dem gegenläufige Abgasstrom nicht in den heißen Drehrohrofen, sondern zum großen Teil direkt ins Abgas. Durch die erfindungsgemäße Anlage ist eine sichere und effiziente Reinigung dieser großen Palette von Schadstoffen gewährleistet und es ist der Einsatz einer qualitativ und quantitativ größeren Menge an Sekundärrohstoffen und Sekundärbrennstoffen ohne negative Auswirkung auf die Umwelt möglich.

### Abgas eines Zementklinkerofens im Verbundbetrieb

| | |
|---|---|
| Volumenstrom | 200.000 Nm³/h |
| Temperatur | 150°C |
| VOC | 600 mg/Nm³ trocken bez. auf 10 % O2 |
| CO | 5000 mg/Nm³ trocken bez. auf 10 % O2 |
| NOx | 800 mg/Nm³ trocken bez. auf 10 % O2 |
| Staub | 2 - 5 mg/Nm³ nach Gewebefilter |

Mit der erfindungsgemäßen Anlage (5-Bett Variante) wird der Energieinhalt des Abgases in Form der Schadstoffe genutzt, um im autothermen Betrieb VOCs, CO, und NOx zu reinigen.

Dazu wird der regenerative Wärmetauscher genutzt, um das Abgas auf > 800°C vorzuwärmen, wodurch durch Oxidation von CO und VOCs ausreichend Energie zur Aufrechterhaltung dieser Temperatur freigesetzt wird.
Die CO und TOC Reinigung beträgt 99,5 %

### Abgas stromab Brennkammer (Eintritt SCR Katalysator)

| | |
|---|---|
| Temperatur | 320°C |
| CO | 25 mg/Nm³ |
| TOC | 3 mg/Nm³ |
| NOx | 820 mg/Nm³ |

### Gereinigtes Abgas stromab des SCR Katalysators (Kamin)

| | |
|---|---|
| Temperatur | 200°C |
| CO | 30 mg/Nm³ |
| TOC | 5 mg/Nm³ |
| NOx | 150 mg/Nm³ |
| NH3 | 5 mg/Nm³ |

Der Reduktionsmittelverbrauch der SCR Stufe beträgt dabei 65 kg/h NH₃ (100%) und ist vor allem deshalb so gering, weil durch das erfindungsgemäße Verfahren und die damit verbundene kurzzeitige Erhitzung des Abgases auf >800°C (Gleichgewicht des NOx auf Seite des NO), gefolgt von einer ebenso raschen Abkühlung auch vorhandenes NO2 thermisch zu NO umgewandelt wird.

Hierdurch können auch für diese Anwendungen Grenzwerte, wie sie nach TA-Luft üblich sind, wirtschaftlich eingehalten werden.

### Beispiel 2

### (Ammoniumnitrat Herstellung)

Sowohl zur Herstellung von Düngemitteln als auch Chemikalien wie Ammoniumnitrat, Caprolactam, Adipinsäure, Dinitrotoluol und Nitrobenzol wird zu Beginn Salpetersäure verwendet, die aus Ammoniak hergestellt wird. Dabei wird als Nebenprodukt das Treibhausgas Lachgas (N₂O) frei, welches ein ca. 320 mal so hohes Erderwärmungspotential wie CO₂ aufweist und daher häufig trotz hoher Investitions- und Betriebskosten katalytisch gereinigt wird, da derzeit noch durch den Handel mit CO₂ Zertifikaten eine teilweise Kompensation dieser Kosten möglich ist.

Mit dem erfindungsgemäßen Verfahren ist eine simultane Beseitigung von Lachgas, VOCs und NOx mit deutlich niedrigeren Gesamtkosten möglich.

Zur Produktion von 560 to/d an Ammoniumnitrat werden 7700 kg/h Ammoniak benötigt. Im korrespondierenden "Tailgas" von 70.000 Nm³/h sind 3 g/Nm³ N₂O enthalten. Wird ein Katalysator zur N₂O Abreinigung verwendet, liegt die Reinigungsleistung deutlich unter 90 %, bei deutlich höheren Gesamtkosten, bedingt durch die rasche Vergiftung des Katalysators (1-3 Produktionszyklen).

Mit der erfindungsgemäßen Anlage wird Lachgas thermisch zu N₂ zersetzt (> 95 % Reinigung). Die in einer Nebenreaktion aus < 14 mol-% des N₂O gebildeten Stickoxide werden gemeinsam mit den ohnehin im Abgas enthaltenen Stickoxiden über den integrierten SCR Reaktor gereinigt, ohne das Abgas ein zweites Mal aufheizen zu müssen, wodurch die Betriebskosten auf weniger als die Hälfte gegenüber der rein katalytischen Variante reduziert werden können.

Gleichzeitig ist mit dem erfindungsgemäßen Verfahren die Umweltbelastung (VOCs und NOx) um 95 % reduziert (Nur die halbe Emission der rein katalytischen Variante) und zusätzlich werden auch die Stickoxide reduziert und allfällig vorhandene Methanemissionen aus dem Prozess gereinigt und energetisch genutzt.

Durch die Kombination SCR und thermischer SNCR, also nicht katalytischer Entstickung ist eine extrem hohe Reinigungsleistung erreichbar. Da der Reduktionsmittelverbrauch der thermischen Reduktion ca. doppelt so hoch ist wie für die SCR, kann bei frischem SCR Katalysator hauptsächlich dieser zur NOx Reduktion verwendet werden und bei Alterung oder partieller Vergiftung desselben entsprechend die thermische Entstickung mitverwendet werden, um die Reingaskonzentration stabil niedrig zu halten.

Nachstehend ist die Erfindung anhand der beigefügten Zeichnung beispielhaft näher erläutert. Darin zeigen jeweils schematisch:
Figur 1 eine Abgasreinigungsvorrichtung mit zwei Reaktoren;
Figur 2a und 2b jeweils einen Schnitt durch einen Regenerator als Rohgaseintritt-Regenerator bzw. Reingasaustritt-Regenerator einer Abgasreinigungsvorrichtung mit zwei Regeneratoren; und
Figur 3 eine Abgasreinigungsvorrichtung mit 5 Regeneratoren.

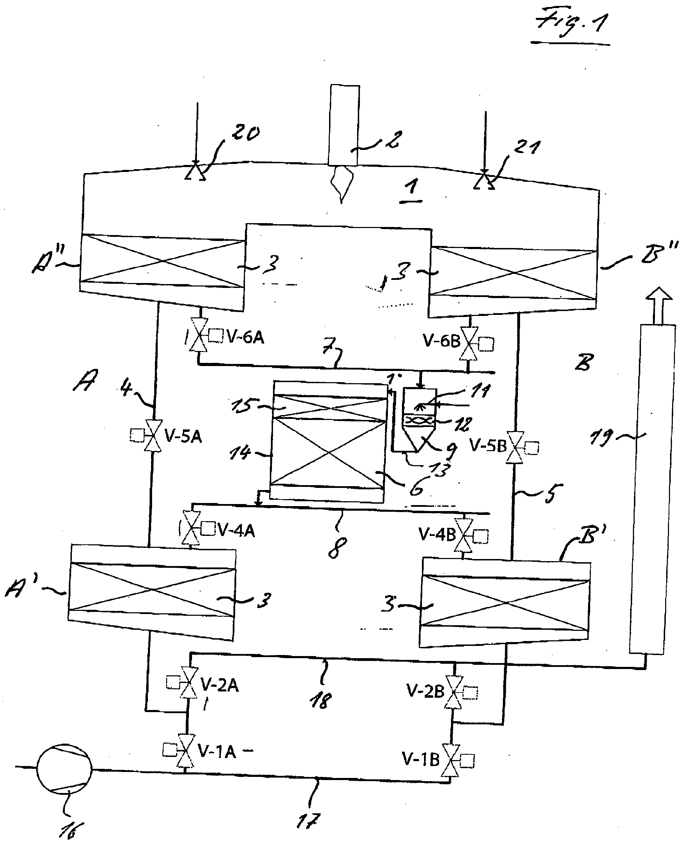

Gemäß Figur 1 weist die regenerative thermische Nachverbrennungsvorrichtung zwei Regeneratoren A und B auf, welche durch eine gemeinsame Brennkammer 1 mit einem Brenner 2 oder eine Elektroheizung verbunden sind. In der Brennkammer 1, in der die Temperatur beispielsweise 900°C beträgt, wird das Abgas thermisch abgereinigt.

Die Regeneratoren A und B sind jeweils in Strömungsrichtung zweigeteilt. Das heißt sie bestehen jeweils aus einem unteren, von der Brennkammer 7 abgewandten Abschnitt A' bzw. B' und einem oberen, der Brennkammer 1 zugewandten Abschnitt A" und B". Die Abschnitte A', A", B'und B" sind jeweils mit Wärmespeicherkörpern 3 gefüllt.

Die beiden Abschnitte A', A" und B', B" jedes Regenerators A und B sind über eine Leitung 4 bzw. 5, die jeweils mit einem Absperrorgan V-5A und V-5B versehen sind, miteinander verbunden.

Die beiden Regeneratoren A und B weisen einen gemeinsamen SCR-Katalysator 6 auf.

Dazu sind die oberen Abschnitte A" und B" an ihrem unteren Ende über ein Absperrorgan V-6A und V-6B mit einer Leitung 7 und die unteren Abschnitte A' und B' an ihrem oberen Ende Absperrorgane über V-4A und V-5B mit einer Leitung 8 verbunden.

Die obere Leitung 7, über die das in der Brennkammer 1 thermisch abgereinigte Abgas je nach Schaltung der Absperrorgane V-6A bzw. V-6B zugeführt wird, ist an eine Kammer 9 angeschlossen, welche beispielsweise einen Rechen mit Düsen 11 zur Zufuhr einer Stickstoffwasserstoffverbindung als Reduktionsmittel für die SCR-Reaktion mit dem Katalysator 6 aufweist.

Die Düsen 11 sind in der Kammer 9 stromaufwärts eines Mischers 12, beispielsweise aus Schikanen, angeordnet. Von dem Mischer 12 führt eine Leitung 13 in das obere Ende einer Kammer 14, in der der SCR-Katalysator 6 angeordnet ist.

Zwischen der Stelle, an der die Leitung 13 in die Kammer 14 mündet, und dem Katalysator 6 ist eine Keramik-Schüttung 15, beispielsweise aus Sattelkörpern, vorgesehen, die der zusätzlichen Vermischung des Reduktionsmittels mit dem in der Brennkammer 1 thermisch abgereinigten Abgas sowie zur Vergleichsmäßigung der Temperatur des in den Katalysator 6 eintretenden Abgases dient.

Das nach Passieren des SCR-Katalysators 6 gebildete Reingas wird aus der Kammer 14 über die Leitung 8 dem unteren Abschnitt A' bzw. B' des jeweils als Reingasaustritt-Regenerator geschalteten Regenerators A oder B am oberen Ende zugeführt.

Das Rohgas wird mit einem Gebläse 16 über eine Rohgasleitung 17 zugeführt, an die die beiden Regeneratoren A und B über Absperrorgane V-1A und V-1 B angeschlossen sind, und zwar jeweils am unteren Ende ihres unteren Abschnitts A' bzw. B'.

Das Reingas wird über eine Reingasleitung 18 und den Kamin 19 ins Freie abgeführt. Dazu ist die Reingasleitung an das untere Ende der unteren Abschnitte A' und B' der beiden Reaktoren A und B über Absperrorgane V-2A und V-2B angeschlossen.

In der Brennkammer 1 sind oberhalb der beiden Regeneratoren A und B jeweils Düsen 20, 21 vorgesehen, mit denen eine Stickstoffwasserstoffverbindung als Reduktionsmittel zugeführt wird, um die Stickoxide in der Brennkammer zumindest teilweise, nämlich thermisch, also nicht katalytisch vorzuentsticken.

Dabei wird jeweils die Düse oder Gruppe von Düsen aktiviert, die über dem Rohgasturm angeordnet ist, um die Verweilzeit für die nichtkatalytische Reduktion zu maximieren.

Die Regeneratoren A und B werden wechselweise betrieben, d. h. entweder als Rohgaseintritt-Regenerator, dessen Wärmespeicherkörper 3 zuvor erwärmt worden sind, um das in die Brennkammer 1 eintretende Rohgas aufzuheizen, oder als Reingasaustritt-Regenerator, aus dem das Reingas unter Abgabe seiner Wärme an die Wärmespeicherkörper des Regenerators A bzw. B für den nächsten Zyklus austritt.

Das heißt, wenn der Regenerator A den Rohgaseintritt-Regenerator und der Regenerator B den Reingasaustritt-Regenerator bildet, werden das Absperrorgan V-1A und das Absperrorgan V-2B geöffnet und die Absperrorgane V-2A und V-1 B geschlossen. Ferner wird dann das Absperrorgan V-5A geöffnet, das die beiden Abschnitte A' und A" des Regenerators A über die Leitung 4 verbindet, während die Absperrorgane V-4A und V-6A die den Regenerator A mit dem SCR-Katalysator 6 verbinden, geschlossen sind.

Beim Regenerator B, der bei diesem Zyklus den Reingasaustritt-Regenerator bildet, ist dann das Absperrorgan V-5B geschlossen, das die beiden Abschnitte B" und B' über die Leitung 5 verbindet, während die Absperrorgane V-6B und V-4B geöffnet sind, so dass das aus dem Abschnitt B" austretende, in der Brennkammer 1 thermisch vorgereinigte und erwärmte Abgas nach Abgabe eines Teils seiner Wärme an die Wärmespeicherkörper 3 des Abschnitts B" und nach Zumischung der Stickstoffwasserstoffverbindung mit den Düsen 11 im statischen Mischer 12 bzw. 15 gemischt wird und durch SCR-Reaktion mit dem Katalysator 6 gereinigt über die Leitung 8 in den unteren Abschnitt B' eintritt, um durch seine Wärme die Wärmespeicherkörper 3 im unteren Abschnitt B' aufzuheizen.

Dabei wird die Höhe des oberen Abschnitts B" des Regenerators B im Verhältnis zur Höhe des unteren Abschnitts B' so gewählt, dass das aus dem Abschnitt B" dem Katalysator 6 zugeführte Abgas eine für die SCR-Reaktion optimale Temperatur von beispielsweise 250 bis 350°C, insbesondere 280 bis 320°C aufweist.

Insgesamt wird die Gesamthöhe des Regenerators so gewählt, dass das Reingas mit einer Temperatur von beispielsweise 30 bis 60°C über der Rohgastemperatur in die Reingasleitung 18 gelangt, und über den Kamin 19 ins Freie. Entsprechendes gilt für die Höhe der Abschnitte A' und A" des Regenerators A und für alle weiteren parallelen Regeneratoren.

Wenn bei dem nächsten Zyklus der Regenerator B den Rohgaseintritt-Regenerator und der Regenerator A den Reingasaustritt-Regenerator bildet, werden die Ventile V-1A, V-2B, V-5A, V-6B und V-4B geschlossen und die Ventile V-2A, V-4A, V-6A und V-5B geöffnet.

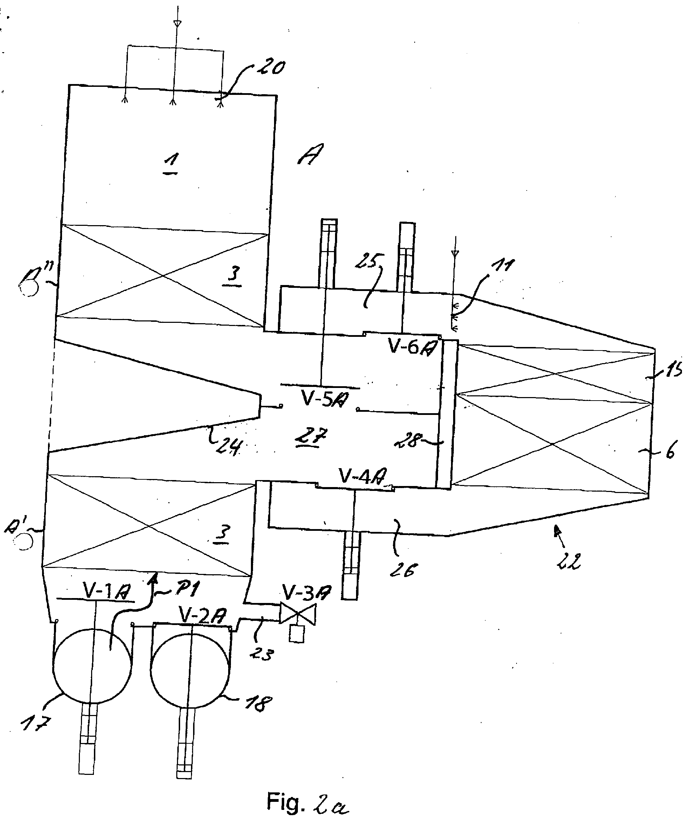

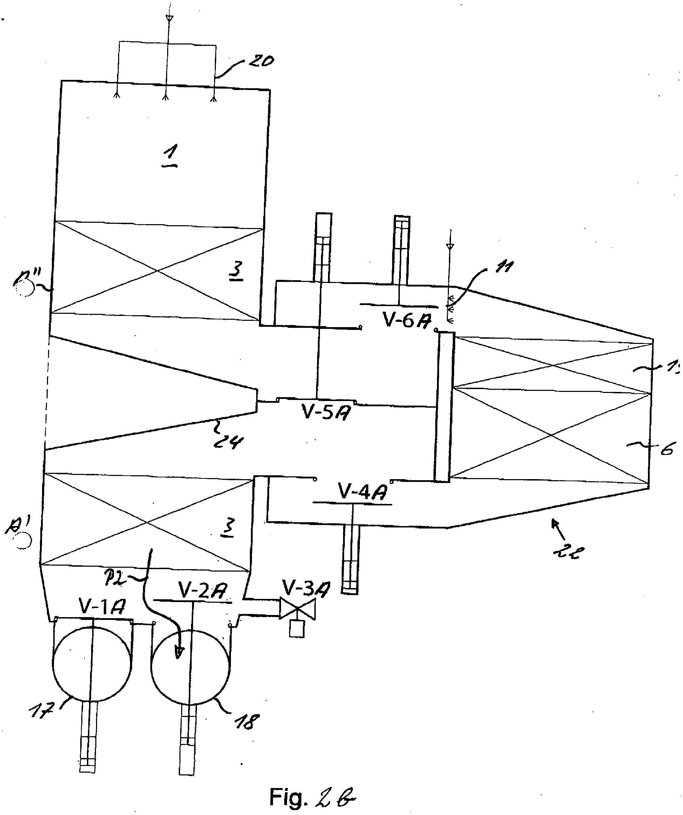

In Figur 2a und Figur 2b ist der Regenerator A gemäß Figur 1 einerseits als Rohgaseintritt-Regenerator (Figur 2a) bzw. Reingasaustritt-Regenerator (Figur 2b) dargestellt. Das eintretende Rohgas ist dabei in Figur 2a durch den Pfeil P1 und das austretende Reingas in Figur 2b durch den Pfeil P2 veranschaulicht.

Wie aus Figur 2a und 2b ersichtlich, sind dabei der Katalysator 6, die Schüttung 15, die Düsen 11 zur Zufuhr der Stickstoffwasserstoffverbindung und die als Tellerventile ausgebildeten Absperrorgane V-4A, V-5A und V-6A in einem Anbau 22 seitlich am Regenerator A vorgesehen.

Die Absperrorgane V-1A und V-2A an der Rohgasleitung 17 bzw. Reingasleitung 18 sind gleichfalls als Tellerventile ausgebildet.

Der zweite Regenerator B (Figur 1) ist hinter dem Regenerator A angeordnet und daher in Figur 2a und 2b nicht zu sehen. Diese Anordnung gilt auch für weitere vorhandene Regeneratoren.

Im Unterschied zu Figur 1 weist der untere Abschnitt A' des Regenerators A und der untere Abschnitt B', der in Figur 2a und 2b nicht zu sehen ist, jeweils an seinem unteren Ende eine Leitung 23 mit einem Absperrorgan V-3A zur Absaugung von verbliebenem Rohgas, welches von oben durch reines Abgas aus der Brennkammer verdrängt wird und anschließend als Teilstrom von ca. 5-10% wieder dem Rohgas zugeführt wird. Die Spülung des Regenerators erfolgt immer dann, nachdem er als Rohgaseintritt-Regenerator eingesetzt worden ist und vor seinem Einsatz als Reingasaustritt-Regenerator.

Gemäß Figur 2a und 2b weist der Regenerator A zwischen den beiden Abschnitten A' und A" ein Umlenkblech oder dergleichen Umlenkkörper 24 auf, der die Strömung des Abgases zwischen den Abschnitten A' und A" in den Anbau 22 umlenkt.

Der Anbau 22 weist einen beiden Regeneratoren A und B gemeinsamen oberen Sammelkanal 25 zur Zufuhr des in der Brennkammer 1 thermisch abgereinigten Abgases von dem oberen Abschnitt A" bzw. B" zu dem Katalysator 6 und einen gemeinsamen unteren Sammelkanal 26 für das mit dem Katalysator 6 gereinigte Reingas auf, das dem unteren Abschnitt A' bzw. B' des Regenerators A bzw. B zugeführt wird.

Zwischen dem oberen Kanal 25 und dem unteren Kanal 26 ist in dem Anbau 22 für jeden Regenerator A, B ein eigener Zwischenraum 27 vorgesehen, in den das Rohgas bzw. Reingas des jeweiligen Regenerators A, B strömt und von dem der Katalysator 6 durch eine Wand 28 getrennt ist.

Wenn der Regenerator A (oder B) den Rohgaseintritt-Regenerator gemäß Figur 2a bildet, wird das Tellerventil V-5A des Regenerators A (bzw. das Tellerventil V-5B des in Figur 2a und 2b nicht dargestellten Regenerators B) geöffnet, während die Tellerventile V-6A und V-4A (bzw. V-6B und V-4B) zu den Sammelkanälen 25 und 26 geschlossen sind.

Wenn der Regenerator A (oder B) den Reingasaustrittregenerator bildet, sind gemäß Figur 2b hingegen die Tellerventile V-4A und V-6A des Regenerators A (und die Tellerventile V-4B und V-6B des Regenerators B) geöffnet, während das Tellerventil V-5A (bzw. V-5B) geschlossen ist.

Die Vorrichtung nach Figur 3 weist fünf Regeneratoren A bis E auf, die alle in gleicher Weise wie die Regeneratoren A und B nach Figur 1 und Figur 2a und 2b ausgebildet sind. Das heißt alle Regeneratoren A bis E, die vorzugsweise senkrecht aneinander angeordnet sind, weisen mit Wärmespeicherkörper 3 gefüllte Abschnitte A', A", B', B" ... sowie eine gemeinsame Brennkammer 1 und einen gemeinsamen Katalysator 6 auf.

Der Katalysator 6 ist dabei vorzugsweise in einem seitlichen Anbau angeordnet, der entsprechend Figur 2a und 2b seitlich angebracht und ausgebildet ist.

Mit den Absperrorganen V-5A bis V-5E sind die Abschnitte A', A", B', B".... jedes Generators A bis E miteinander verbindbar. Mit den Absperrorganen V-6A bis V-6E und V-4A bis V-4E sind die Abschnitte A', A", B', B" ... über den Katalysator 6 im Anbau miteinander verbindbar.

Die obere Sammelleitung 25 und die untere Sammelleitung 26 gemäß Figur 2a und 2b sind in Figur 3 schematisch dargestellt.

Jeweils ein Paar der Regeneratoren A bis E ist dabei auf Rohgaseintritt geschaltet, ein weiteres Paar der Regeneratoren A bis E auf Reingasaustritt, während der fünfte Regenerator A bis E zum Spülen vorgesehen ist.

Dazu sind die Regeneratoren A bis E mit dem unteren Ende ihrer unteren Abschnitte A', B'... über die Absperrorgane V-3A (vgl. Figur 2a und 2b) bis V-3E an eine Spülgasleitung 26 angeschlossen, die das aus den Regeneratoren A bis E mit gereinigtem Abgas aus der Brennkammer ausgespülte Rohgas der Rohgasleitung 17 stromaufwärts des Gebläses 16 zuführt.

Das zyklische Betriebsschema der Vorrichtung nach Figur 3 mit fünf Regeneratoren A bis E ist vorstehend in der Tabelle der Beschreibung veranschaulicht.

## Patentansprüche

1. Verfahren zur Reinigung von Abgas, welches mit dem Sauerstoff im Abgas oxidierbare, thermisch abreinigbare Verbindungen sowie Stickoxide und/oder bei der thermischen Abreinigung Stickoxide bildende Verbindungen enthält, in einer Nachverbrennungsanlage, welche wenigstens zwei, mit Wärmespeicherkörpern (3) gefüllte und mit einer gemeinsamen Brennkammer (1) verbundene Regeneratoren (A, B....) aufweist, wobei das Abgas wechselweise einem Rohgaseintritt-Regenerator (A oder B), dessen Wärmespeicherkörper (3) zuvor erwärmt worden sind, und das aus der Brennkammer (1) austretende, thermisch abgereinigte Abgas einem Reingasaustritt-Regenerator (B oder A) zur Erwärmung von dessen Wärmespeicherkörpern (3) und selektiven katalytischen Reduktion der Stickoxide zu Stickstoff mit einem Reduktionsmittel zugeführt wird, **dadurch gekennzeichnet, dass** die wenigstens zwei Regeneratoren (A, B ...) in Strömungsrichtung jeweils in einen von der Brennkammer (1) abgewandten und einen der Brennkammer (1) zugewandten Regeneratorabschnitt (A', A"; B', B") zweigeteilt sind und die wenigstens zwei Regeneratoren (A, B.....) einen gemeinsamen Katalysator (6) zur selektiven katalytischen Reduktion aufweisen, wobei das in der Brennkammer (1) thermisch abgereinigte Abgas nach Abkühlung in dem der Brennkammer (1) benachbarten Abschnitt (A", B") des Reingasaustritt-Regenerators (A, B...) auf die zur selektiven katalytischen Reduktion erforderliche Temperatur und Vermischung mit dem Reduktionsmittel dem gemeinsamen Katalysator (6) zur Bildung von Reingas zugeführt wird, welches nach Abgabe von Wärme an die Wärmespeicherkörper (3) des von der Brennkammer (1) abgewandten Abschnitts (A', B') des Reingasaustritt-Generators (A, B...) ins Freie strömt.

2. Verfahren nach Anspruch 1, **dadurch gekennzeichnet, dass** das zu reinigende Abgas als oxidierbare, thermisch abreinigbare Verbindungen flüchtige organische Verbindungen, Kohlenmonoxid, Ammoniak und/oder Lachgas und als bei der thermischen Abreinigung stickoxidbildende Verbindungen Ammoniak, Lachgas und/oder stickstoffhaltige flüchtige organische Verbindungen enthält.

3. Verfahren nach Anspruch 1, **dadurch gekennzeichnet, dass** die zur selektiven katalytischen Reduktion erforderliche Temperatur 200 bis 400°C beträgt.

4. Verfahren nach einem der vorstehenden Ansprüche, **dadurch gekennzeichnet, dass** die vorhandenen oder gebildeten Stickoxide in der Brennkammer (1) durch Zugabe eines Reduktionsmittels in die Brennkammer (1) thermisch vorentstickt werden.

5. Verfahren nach einem der vorstehenden Ansprüche, **dadurch gekennzeichnet, dass** die Temperatur in der Brennkammer (1) mindestens 800°C und bei thermischer Vorentstickung mindestens 900°C beträgt.

6. Verfahren nach einem der vorstehenden Ansprüche, **dadurch gekennzeichnet, dass** das thermisch abgereinigte Abgas nach Vermischung mit dem Reduktionsmittel durch eine Keramikschüttung (15) zur Vergleichmäßigung der Temperatur des Abgases vor Eintritt in den Katalysator (6) strömt.

7. Verfahren nach einem der vorstehenden Ansprüche, **dadurch gekennzeichnet, dass** zur Reduktion der Stickoxide in der Brennkammer (1) und/oder mit dem Katalysator (6) zu Stickstoff eine Stickstoffwasserstoffverbindung verwendet wird.

8. Verfahren nach einem der vorstehenden Ansprüche, **dadurch gekennzeichnet, dass** die Verweilzeit des Abgases in der Brennkammer (1) 0,3 bis 1 Sekunden, und bei thermischer Vorentstickung 1 bis 4 Sekunden beträgt.

9. Verfahren nach einem der vorstehenden Ansprüche, **dadurch gekennzeichnet, dass** ein weiterer Regenerator (A bis E) zum Spülen des Rohgaseintritt-Regenerators (A bis E) mit Reingas vor dessen Wechsel zum Reingasaustritt-Regenerator vorgesehen ist.

10. Vorrichtung zur Durchführung des Verfahrens nach einem der vorstehenden Ansprüche, **gekennzeichnet durch** eine Nachverbrennungsanlage mit wenigstens zwei, eine gemeinsame Brennkammer (1) aufweisenden Regeneratoren (A, B), die jeweils zwei übereinander angeordnete, mit Wärmespeicherkörpern (3) gefüllte Abschnitte (A', A"; B', B") aufweisen und an denen seitlich ein gemeinsamer Anbau (22) mit dem Katalysator (6) zur selektiven katalytischen Reaktion angeschlossen ist, wobei der Anbau (22) Absperrorgane (V-4A, V-5A, V-6A; V-4B, V-5B, V-6B) zum Verbinden des Katalysators (6) mit dem unteren Abschnitt (A', B') und dem oberen Abschnitt (A" und B") mit oder ohne Durchströmen des Katalysators (6) aufweist.

11. Vorrichtung nach Anspruch 10, **dadurch gekennzeichnet, dass** der Anbau (22) einen oberen, den wenigstens zwei Regeneratoren (A, B) gemeinsamen Sammelkanal (25) zur Zufuhr des thermisch abgereinigten Abgases zu dem Katalysator (6), einen unteren , den wenigstens zwei Regeneratoren (A, B) gemeinsamen unteren Sammelkanal (26) für das mit dem Katalysator (6) gereinigte Reingas, einen zwischen oberem Sammelkanal (25) und unterem Sammelkanal (26) angeordneten Zwischenraum (27) für jeden Regenerator (A, B) mit den Absperrorganen (V-4A, V-5A, V-6A) (V-4B, V-5B, V-6B) zum Verbinden des oberen Sammelkanals (25) mit dem unteren Sammelkanal (26) über den Katalysator (6) oder zum Verbinden des unteren Abschnitts (A', B') des Regenerators (A, B) mit dessen oberen Abschnitt (A", B") über den Zwischenraum (27) aufweist.

12. Vorrichtung nach Anspruch 11, **dadurch gekennzeichnet, dass** in dem oberen Sammelkanal (25) die Düsen (11) zur Zufuhr des Reduktionsmittels für die selektive katalytische Reduktion mit dem Katalysator (6) vorgesehen sind.

13. Vorrichtung nach einem der Ansprüche 10 - 12, **dadurch gekennzeichnet, dass** auf dem Katalysator (6) eine Keramik-Schüttung (15) zur Vergleichsmäßigung der Temperatur des Abgases und Vermischung des Abgases mit dem Reduktionsmittel vorgesehen ist.

14. Vorrichtung nach einem der Ansprüche 10 - 13, **dadurch gekennzeichnet, dass** mehrere Paare von Regeneratoren (A bis E) vorgesehen sind, die jeweils zwei übereinander angeordnete mit Wärmespeicherkörpern gefüllte Abschnitte (A', A", B', B" ...) aufweisen und an denen seitlich ein gemeinsamer Anbau (22) mit dem Katalysator (6) zur selektiven katalytischen Reaktion angeschlossen ist, wobei der Anbau Absperrorgane (V-4A bis V-4E, V-5A bis V-5E, V-6A bis V-6E) enthält, um den oberen Sammelkanal (25) mit dem unteren Sammelkanal (26) über den Katalysator (6) oder den unteren Abschnitt (A', B') mit dem oberen Abschnitt (A", B", ...) der Regeneratoren (A bis E) zu verbinden.

15. Verwendung der Vorrichtung nach einem der Ansprüche 10 bis 14 zur Reinigung des bei der Zementklinker-, Salpetersäure-, Adipinsäure-, Düngemittel- oder Urantrioxidherstellung anfallenden Abgases.

## Claims

1. Process for the purification of waste gas containing thermally purifiable compounds oxidizable with the oxygen in the waste gas as well as nitrogen oxides and/or compounds forming nitrogen oxides during the thermal purification in a post-combustion system having at least two regenerators (A, B....) filled with heat-accumulator bodies (3) and connected to a common combustion chamber (1), wherein the waste gas is alternately supplied to a raw gas inlet regenerator (A or B), the heat-accumulator bodies (3) of which have been preheated, and the thermally purified waste gas emerging from the combustion chamber (1) is supplied to a clean gas outlet regenerator (B or A) for the heating of its heat-accumulator bodies (3) and the selective catalytic reduction of the nitrogen oxides to nitrogen by means of a reducing agent, **characterized in that** the at least two regenerators (A, B...) are each divided into two parts in the direction of flow, namely into one regenerator section (A', B') facing away from the combustion chamber (1) and one regenerator section (A", B") facing the combustion chamber (1) and that the at least two regenerators (A, B ...) have a common catalyst (6) for the selective catalytic reduction, wherein, after cooling in the section (A", B") of the clean gas outlet regenerator (A, B ...) adjacent to the combustion chamber (1) to the temperature required for the selective catalytic reduction, and mixing with the reducing agent, the waste gas thermally purified in the combustion chamber (1) is supplied to the common catalyst (6) for forming clean gas, which is directed to the outside after it has conveyed heat to the heat-accumulator bodies (3) of the section (A', B') of the clean gas outlet regenerator (A, B ...) facing away from the combustion chamber (1).

2. Process according to claim 1, **characterized in that** waste gas to be purified contains volatile organic compounds, carbon monoxide, ammonia and/or nitrous oxide as oxidizable, thermally purifiable compounds as well as ammonia, nitrous oxide and/or nitrogen-containing volatile organic compounds as compounds forming nitrogen oxides during the thermal purification.

3. Process according to claim 1, **characterized in that** the temperature required for the selective catalytic reduction is 200 to 400°C.

4. Process according to any of the preceding claims, **characterized in that** the nitrogen oxides existing or being formed in the combustion chamber (1) are thermally pre-denitrified by feeding a reducing agent into the combustion chamber (1).

5. Process according to any of the preceding claims, **characterized in that** the temperature in the combustion chamber (1) is at least 800°C and, in case of thermal pre-denitrification, at least 900°C.

6. Process according to any of the preceding claims, **characterized in that**, after having been mixed with the reducing agent, the thermally purified waste gas flows through a ceramic bulk bed (15) for homogenizing the temperature of the waste gas before it enters the catalyst (6).

7. Process according to any of the preceding claims, **characterized in that** a nitrogen-hydrogen compound is used for reducing the nitrogen oxides in the combustion chamber (1) and/or with the catalyst (6) to nitrogen.

8. Process according to any of the preceding claims, **characterized in that** the residence time of the waste gas in the combustion chamber (1) is 0.3 to 1 second and, in case of thermal pre-denitrification, 1 to 4 seconds.

9. Process according to any of the preceding claims, **characterized in that** a further regenerator (A to E) is provided for purging the raw gas inlet regenerator (A to E) with clean gas before the latter's passing to the clean gas outlet regenerator.

10. Device for carrying out the process according to any of the preceding claims, **characterized by** a post-combustion system with at least two regenerators (A, B) having a common combustion chamber (1) which each have two sections (A', A", B', B") arranged above one another and filled with heat-accumulator bodies (3) and to which a common mounting (22) with the catalyst (6) for the selective catalytic reduction is laterally attached, wherein the mounting (22) has shut-off valves (V-4A, V-5A, V-6A; V-4B, V-5B, V-6B) for connecting the catalyst (6) to the lower section (A', B') and the upper section (A" and B"), with or without the flow passing through the catalyst (6).

11. Device according to claim 10, **characterized in that** the mounting (22) has an upper collecting duct (25) common to the at least two regenerators (A, B) for supplying the thermally purified waste gas to the catalyst (6) and a lower collecting duct (26) common to the at least two regenerators (A, B) for the clean gas purified with the catalyst (6), a space (27) arranged between the upper collecting duct (25) and the lower collecting duct (26) for each regenerator (A, B) with the shut-off valves (V-4A, V-5A, V-6A) (V-4B, V-5B, V-6B) for connecting the upper collecting duct (25) to the lower collecting duct (26) via the catalyst (6) or for connecting the lower section (A', B') of the regenerator (A, B) to the upper section (A", B") thereof via the space (27).

12. Device according to claim 11, **characterized in that** the nozzles (11) for supplying the reducing agent for the selective catalytic reduction with the catalyst (6) are provided in the upper collecting duct (25).

13. Device according to any of claims 10 to 12, **characterized in that**, on the catalyst (6), a ceramic bulk bed (15) is provided for homogenizing the temperature of the waste gas and mixing the latter with the reducing agent.

14. Device according to any of claims 10 to 13, **characterized in that** a plurality of pairs of regenerators (A to E) is provided, each having two sections (A', A", B', B"...) arranged above one another and filled with heat-accumulator bodies (3) and to which a common mounting (22) with the catalyst (6) for the selective catalytic reduction is laterally attached, wherein the mounting (22) contains shut-off valves (V-4A to V-4E, V-5A to V-5E, V-6A to V-6E) for connecting the upper collecting duct (25) to the lower collecting duct (26) via the catalyst (6) or the lower section (A', B') to the upper section (A", B",...) of the regenerators (A to E).

15. Use of the device according to any of claims 10 to 14 for the purification of the waste gas resulting from the production of cement clinker, nitric acid, adipic acid, fertilizers or uranium trioxide.

## Revendications

1. Procédé d'épuration de gaz d'échappement qui contient des composés oxydables avec de l'oxygène dans le gaz d'échappement et thermiquement épurables ainsi que des oxydes d'azote et/ou des composés formant des oxydes d'azote lors de l'épuration thermique, dans une installation de postcombustion qui présente au moins deux régénérateurs (A, B...) remplis de corps d'accumulation de chaleur (3) et reliés à une chambre de combustion (1) commune, le gaz d'échappement étant amené en alternance à un régénérateur d'entrée de gaz brut (A ou B) dont les corps d'accumulation de chaleur (3) ont été auparavant chauffés, et le gaz d'échappement thermiquement épuré sortant de la chambre de combustion (1) étant amené à un régénérateur de sortie de gaz pur (B ou A) pour chauffer ses corps d'accumulation de chaleur (3) et pour effectuer la réduction catalytique sélective des oxydes d'azote en azote au moyen d'un agent réducteur, **caractérisé en ce que** lesdits au moins deux régénérateurs (A, B...) sont chacun divisés en deux parties en direction d'écoulement, en un tronçon de régénérateur (A', B") détourné de la chambre de combustion (1) et en un tronçon de régénérateur (A', B") tourné vers la chambre de combustion (1), et **en ce que** lesdits au moins deux régénérateurs (A, B...) présentent un catalyseur (6) commun pour la réduction catalytique sélective, le gaz d'échappement thermiquement épuré dans la chambre de combustion (1) étant, après refroidissement dans le tronçon (A", B") voisin de la chambre de combustion (1), du régénérateur de sortie de gaz pur (A, B...) à la température requise pour la réduction catalytique sélective et après le mélange avec l'agent réducteur, amené au catalyseur (6) commun pour former du gaz pur qui s'échappe à l'air libre après avoir fourni de la chaleur aux corps d'accumulation de chaleur (3) du tronçon (A', B') détourné de la chambre de combustion (1), du régénérateur de sortie de gaz pur (A, B...).

2. Procédé selon la revendication 1, **caractérisé en ce que** le gaz d'échappement à épurer contient en tant que composés oxydables et thermiquement épurables des composés organiques volatils, du monoxyde de carbone, de l'ammoniaque et/ou du protoxyde d'azote et, en tant que composés qui forment de l'azote lors de l'épuration thermique, de l'ammoniaque, du protoxyde d'azote et/ou des composés organiques volatils contenant de l'azote.

3. Procédé selon la revendication 1, **caractérisé en ce que** la température requise pour la réduction catalytique sélective est entre 200 et 400°C.

4. Procédé selon l'une des revendications précédentes, **caractérisé en ce que** les oxydes d'azote existants ou formés sont préalablement désazotés thermiquement dans la chambre de combustion (1) par addition d'un agent réducteur dans la chambre de combustion (1).

5. Procédé selon l'une des revendications précédentes, **caractérisé en ce que** la température dans la chambre de combustion (1) est d'au moins 800°C et de 900°C en cas de désazotion thermique.

6. Procédé selon l'une des revendications précédentes, **caractérisé en ce qu'**après un mélange avec l'agent réducteur, le gaz d'échappement thermiquement épuré s'écoule à travers un remplissage céramique (15) pour uniformiser la température du gaz d'échappement avant son entrée dans le catalyseur (6).

7. Procédé selon l'une des revendications précédentes, **caractérisé en ce que** pour la réduction des oxydes d'azote dans la chambre de combustion (1) et/ou avec le catalyseur (6) pour former de l'azote, on utilise un composé d'azote et d'hydrogène.

8. Procédé selon l'une des revendications précédentes, **caractérisé en ce que** le temps de séjour du gaz d'échappement dans la chambre de combustion (1) est de 0,3 à 1 secondes et de 1 à 4 secondes en cas de désazotion thermique.

9. Procédé selon l'une des revendications précédentes, **caractérisé en ce qu'**il est prévu un autre régénérateur (A à E) pour rincer le régénérateur d'entrée de gaz brut (A à E) avec du gaz pur avant son changement en régénérateur de sortie de gaz pur.

10. Dispositif de mise en oeuvre du procédé selon l'une des revendications précédentes, **caractérisé par** une installation de postcombustion comportant au moins deux régénérateurs (A, B) présentant une chambre de combustion (1) commune, lesquels présentent chacun deux tronçons (A', A" ; B, B") agencés l'un sur l'autre, remplis de corps d'accumulation de chaleur (3) et auxquels est latéralement raccordée une annexe (22) commune avec le catalyseur (6) pour la réaction catalytique sélective, l'annexe (22) présentant des organes d'obturation (V-4A, V-5A, V-6A ; V-4B, V-5B, V-6B) pour relier le catalyseur (6) au tronçon (A', B') inférieur et au tronçon supérieur (A" et B") avec ou sans écoulement à travers le catalyseur (6).

11. Dispositif selon la revendication 10, **caractérisé en ce que** l'annexe (22) présente un canal de collecte supérieur (25) commun auxdits au moins deux régénérateurs (A, B) pour l'amenée du gaz d'échappement épuré thermiquement au catalyseur (6), un canal de collecte inférieur (26) commun auxdits au moins deux régénérateurs (A, B) pour le gaz pur épuré avec le catalyseur (6), un intervalle (27) pour chaque régénérateur (A, B) agencé entre le canal de collecte supérieur (25) et le canal de collecte inférieur (26), avec les organes d'obturation (V-4A, V-5A, V-6A) (V-4B, V-5B, V-6B) pour relier le canal de collecte supérieur (25) au canal de collecte inférieur (26) par l'intermédiaire du catalyseur (6) ou pour relier le tronçon inférieur (A', B') du régénérateur (A, B) avec son tronçon supérieur (A", B") par l'intermédiaire de l'intervalle (27).

12. Dispositif selon la revendication 11, **caractérisé en ce que** dans le canal de collecte supérieur (25) sont prévues les buses (11) pour l'amenée de l'agent réducteur pour la réduction catalytique sélective avec le catalyseur (6).

13. Dispositif selon l'une des revendications 10 à 12, **caractérisé en ce que** sur le catalyseur (6) est prévu un remplissage de céramique (15) pour uniformiser la température du gaz d'échappement et pour mélanger le gaz d'échappement avec l'agent réducteur.

14. Dispositif selon l'une des revendications 10 à 13, **caractérisé en ce qu'**il est prévu plusieurs paires de régénérateurs (A à E) qui présentent chacune deux tronçons (A', A" ; B, B"....) agencés l'un sur l'autre, remplis de corps d'accumulation de chaleur (3) et auxquels est latéralement raccordée une annexe (22) commune avec le catalyseur (6) pour la réduction catalytique sélective, l'annexe présentant des organes d'obturation (V-4A à V-4E, V-5A à V-5E, V-6A à V-6E) pour relier le canal de collecte supérieur (25) au canal de collecte inférieur (26) par l'intermédiaire du catalyseur (6) ou le tronçon inférieur (A', B') au tronçon supérieur (A", B"...) des régénérateurs (A à E).

15. Utilisation du dispositif selon l'une des revendications 10 à 14 pour épurer le gaz d'échappement produit lors de la fabrication de clinker de ciment, d'acide nitrique, d'acide adipique, d'engrais ou de trioxyde d'uranium.
